# EUROPEAN PATENT SPECIFICATION

(11) **EP 4 379 417 B1**
(45) Date of publication and mention of the grant of the patent: **07.05.2025**
(21) Application number: 23204078.2
(22) Date of filing: 17.10.2023
(51) Int. Cl.: G01S 7/481, G01S 7/4911, G01S 7/4913, G01S 7/4912, G01S 17/34, G01S 7/51

(54) **DUAL-WAVELENGTH PHASE RANGE FINDER FOR IMPROVING MEASUREMENT OF VISION CAPTURE**
ZWEIWELLENLÄNGEN-PHASENENTFERNUNGSMESSER ZUR VERBESSERUNG DER MESSUNG DER SICHTERFASSUNG
TÉLÉMÈTRE À DOUBLE LONGUEUR D'ONDE POUR AMÉLIORER LA MESURE DE CAPTURE VISUELLE

(30) Priority: 30.11.2022 CN 202223208294 U
(43) Date of publication of application: 05.06.2024
(73) Proprietor: Sndway Technology (Guangdong) Co., Ltd., Dongguan Guangdong (CN)
(72) Inventor: HUANG, Zan, Dongguan, Guangdong (CN)
(74) Representative: Herrero & Asociados, S.L.

(56) References cited:
- US-A1- 2014 071 432
- US-A1- 2020 256 961
- US-A1- 2021 247 495

## Description

### TECHNICAL FIELD

The disclosure relates to the field of laser ranging, in particular to a dual-wavelength phase range finder for improving measurement of vision capture.

### BACKGROUND

Laser-ranging devices are widely used in fields such as architecture and interior decoration due to their high measurement accuracy.

However, for traditional laser ranging devices, it is difficult for a naked eye of a user to clearly see whether a laser irradiates a target in a strong light environment, and the ranging to the target may be performed under a condition that the laser does not irradiate the target, thereby resulting in a problem of inaccurate measurement.

US2021247495A1 discloses a light emitting module, an optical signal detection unit, an optical system and a laser radar system. The light emitting module comprises: a high-frequency modulation signal output unit, which is configured to output at least two preset high-frequency modulation signals with different frequencies; a laser emitting unit, which is connected with the high-frequency modulation signal output unit, and is configured to emit at least two laser beams with different frequencies after being respectively modulated by at least two high-frequency modulation signals with different frequencies; a reference signal emitting unit, which is connected with the high-frequency modulation signal output unit, and is configured to emit at least two reference signals with different frequencies after being respectively modulated by at least two high-frequency modulation signals with different frequencies.

US20140071432A1 discloses a system and method for a rangefinding instrument incorporating pulse and continuous wave signal generating and processing techniques for increased distance measurement accuracy. The use of the former technique effectively solves the ambiguity issues inherent in the latter while allowing for relatively simple circuit implementations. Thus, a potentially more accurate phase-based distance measurement technique can be utilized which is also completely independent of the maximum range to the target.

US2020256961A1 discloses amplifier input protection circuits. In one embodiment, a photoreceiver for a lidar system has a photodetector configured to generate an output current in response to received light. A transimpedance amplifier is configured to receive the output current and generate a voltage output corresponding to the output current in response thereto, and a diode circuit has a cathode coupled at a node between the photodetector output and the transimpedance amplifier input.

### SUMMARY

In view of the above shortcomings in the related art, a purpose of the disclosure is to provide a dual-wavelength phase range finder for improving measurement of visual capture, and the range finder solves the technical problem of inaccurate measurement in the related art.

In order to achieve the above purpose, a phase range finder according to claim 1 is provided.

Therefore, in an embodiment of the disclosure, the laser aiming device is added to the dual-wavelength phase range finder, the laser aiming device is configured to emit the visible light signal to the naked eye, and the outer optical path is configured to emit the first invisible light signal for measurement, and thus the measurement can be performed by a dual-wavelength measurement method. Even in a strong light environment, the naked eye of the user can also accurately see whether the visible light is irradiated on the target, and thus the range finder can adapt to measurements in various environments. The dual-wavelength phase range finder also improves measurement range, measurement accuracy, and measurement speed, and the dual-wavelength phase range finder solves the problem of large measurement errors in various complex environments.

Additional preferred embodiments are mirrored by the dependent claims.

### BRIEF DESCRIPTION OF DRAWINGS

FIG. 1 illustrates a schematic diagram of a dual-wavelength phase range finder for improving measurement of vision capture provided in an embodiment of the disclosure.
FIG. 2 illustrates a schematic diagram of a frequency synthesizing device provided in the embodiment of the disclosure.
FIG. 3 illustrates a schematic diagram of a laser processing device provided in the embodiment of the disclosure.
FIG. 4 illustrates a schematic diagram of a receiver and a transconductance amplification circuit provided in the embodiment of the disclosure.
FIG. 5 illustrates a schematic diagram of a bias circuit provided in the embodiment of the disclosure.
FIG. 6 illustrates a schematic diagram of a low-frequency bandpass amplification circuit provided in the embodiment of the disclosure.

### DETAILED DESCRIPTION OF EMBODIMENTS

At present, a red light ranging scheme on the market has shortcomings including a short measurement range and poor measurement accuracy, and thus it is difficult to be used in outdoor measurement.

In view of the above shortcomings, embodiments of the disclosure provide a dual-wavelength phase range finder for improving measurement of visual capture. A laser aiming device is added to the dual-wavelength phase range finder, the laser aiming device is configured to emit a visible light signal to the naked eye, and an outer optical path is configured to emit a first invisible light signal for measurement, and thus the measurement can be performed by a dual-wavelength measurement method. Even in a strong light environment, the naked eye of the user can also accurately see whether the visible light is irradiated on the target, and thus the range finder can adapt to measurements in various environments. The dual-wavelength phase range finder also improves measurement range, measurement accuracy, and measurement speed, and the dual-wavelength phase range finder solves the problem of large measurement errors in various complex environments.

It should be understood that the dual-wavelength phase range finder for improving measurement of visual capture may also be referred to as a laser ranging system.

It should be noted that the dual-wavelength phase range finder may be applied to an outdoor environment as well as an indoor environment.

In order to understand the above technical solutions clearer, exemplary embodiments of the disclosure will be described in detail below with reference to the drawings. Although the exemplary embodiments of the disclosure are shown in the drawings, it should be understood that the disclosure may be implemented in various forms and should not be limited by the embodiments set forth herein. On the contrary, these embodiments are provided to understand the disclosure clearer and to fully convey the scope of the disclosure to those skilled in the art.

It should be noted that the devices involved in the embodiments of the disclosure are all physical devices, and the connection modes involved are physical connections.

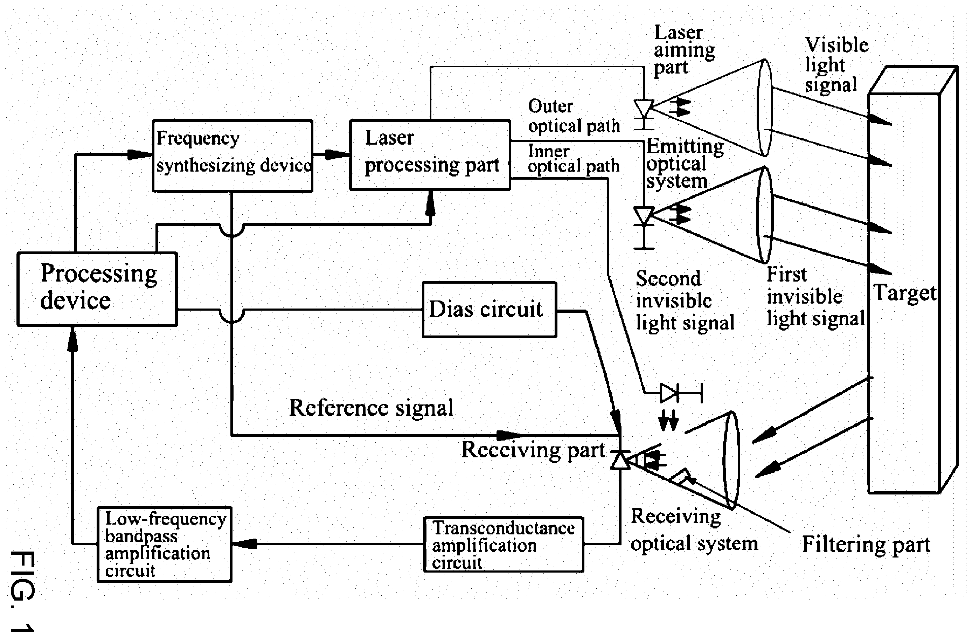

Please refer to FIG. 1, FIG. 1 illustrates a schematic diagram of a dual-wavelength phase range finder for improving measurement of vision capture provided in an embodiment of the disclosure. As shown in FIG. 1, the dual-wavelength phase range finder includes an emitting device, a receiving device, and a processing device. Specifically, the emitting device may include a frequency synthesizing device, a laser processing device, a laser aiming device configured to aim a target, and an emitting optical system configured to collimate and focus a laser and project the laser on the target. The receiving device may include a receiving optical system configured to receive signals diffusely reflected back from the target and focus the signals on a receiver, a filtering device, and a signal-transmitting circuit of the receiving device. The signal-transmitting circuit includes a transconductance amplification circuit and a low-frequency bandpass amplification circuit; the transconductance amplification circuit is configured to pre-amplify a first low-frequency signal and a second low-frequency signal demodulated by the receiver to obtain a pre-amplified first low-frequency signal and a pre-amplified second low-frequency signal; and the low-frequency bandpass amplification circuit is configured to amplify the pre-amplified first low-frequency signal and the pre-amplified second low-frequency signal within a preset frequency range to obtain actual phase signals.

Specifically, the processing device may control the frequency synthesizing device to generate a high-frequency modulation signal and a reference signal. The high-frequency modulation signal passes through the laser processing device to generate a first invisible light signal configured to emit to the target, the first invisible light signal may be collimated and focused by the emitting optical system to project onto the target, and an optical path that the first invisible light signal is emitted from the emitting optical system, irradiated on the target, diffusely reflected to the filtering device, and emitted to the receiver is considered as an outer optical path. The frequency synthesizing device may simultaneously generate another invisible optical path with the same frequency as the outer optical path, and the another invisible optical path is directly irradiated to an inner optical path of the receiver through the filtering device. The filtering device only allows measurement signals to pass through, and light signals with other wavelengths are blocked by the filtering device (in other words, the filtering device only allows a first reflecting light signal, a second invisible light signal used as a reference, and other measurement signals with long wavelengths to pass through; and the filtering device filters out signals with short wavelengths, such as a second reflecting light signal), i.e., the filtering device is configured to allow the first reflecting light signal and the second invisible light signal to pass through, the first reflecting light signal is obtained by reflecting the first invisible light signal after the first invisible light signal is irradiated onto the target, the filtering device is further configured to block the second reflecting light signal (i.e., block the second reflecting light signal), the second reflecting light signal is obtained by reflecting the visible light signal after the visible light signal is irradiated onto the target, thereby to avoid interference of two wavelengths affecting measurement of a distance. Specifically, the wavelength of the first invisible light signal is equal to the wavelength of the second invisible light signal.

In addition, While measuring, the processing device also controls the laser aiming device to emit visible light signals or laser signals (such as a green laser, a blue laser, or a red laser) with strong visual impacts, and thus the target can be seen clearly under strong outdoor lights by using the strong visual impacts of light sources.

Furthermore, the processing device may control the first reflecting light signal and the reference signal to undergo a photoelectric frequency mixing process at the receiver, thereby obtaining the first low-frequency signal used to measure the distance. The processing device further controls the second invisible light signal and the reference signal to undergo the photoelectric frequency mixing process at the receiver, thereby obtaining the second low-frequency signal used to measure the distance. The first low-frequency signal and the second low-frequency signal are transmitted to the processing device through the transconductance amplification circuit and the low-frequency bandpass amplification circuit for phase discrimination to obtain resultant distance data. For example, the processing device uses an existing method to calculate a time difference between the first low-frequency signal amplified by the low-frequency bandpass amplification circuit (i.e., the amplified first low-frequency signal mentioned above) and the second low-frequency signal amplified by the low-frequency bandpass amplification circuit (i.e., the amplified second low-frequency signal mentioned above), and the distance between the dual-wavelength phase range finder and the target is calculated according to the time difference.

In addition, please refer to FIG. 1, the dual-wavelength phase range finder further includes a bias circuit configured to generate and supply a bias voltage to the receiver under control of the processing device, and one end of the bias circuit is connected to the processing device and the other end of the bias circuit is connected to the receiver.

In addition, please refer to FIG. 1, the dual-wavelength phase range finder further includes a display device configured to display the distance, and the display device is connected to the processing device.

In an embodiment, the wavelength of the visible light signal is in a range of 440 nanometers (nm) to 580 nm.

In an embodiment, the wavelength of the first invisible light signal is greater than 760 nm, and the wavelength of the first invisible light signal is equal to the wavelength of the second invisible light signal.

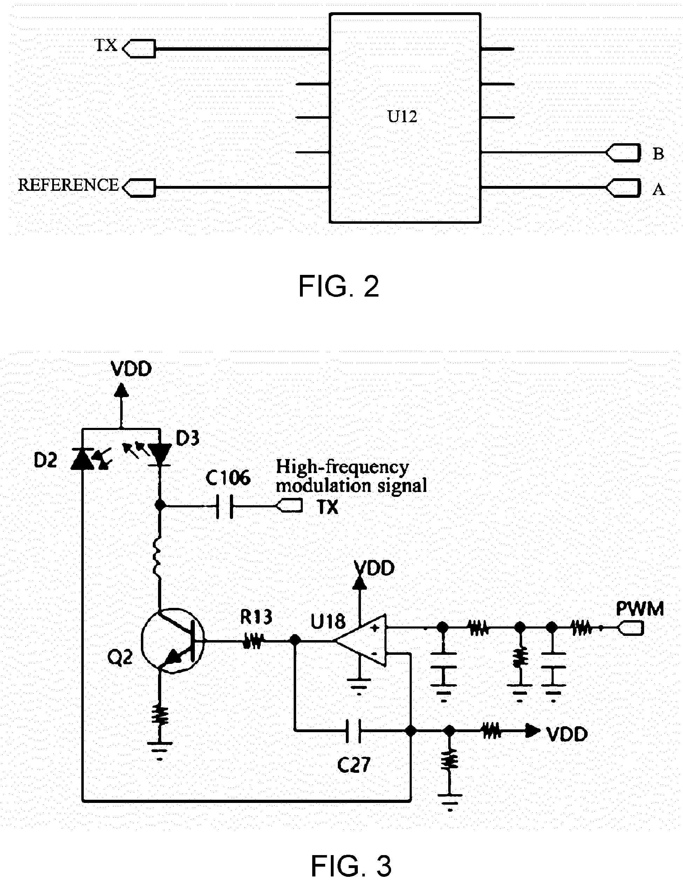

In an embodiment, please refer to FIG. 2, FIG. 2 illustrates a schematic diagram of a frequency synthesizing device provided in the embodiment of the disclosure. The processing device may control the frequency synthesizing device by a port A and a port B on the frequency synthesizing device, and the processing device controls the frequency synthesizing device to output multiple sets of high-frequency modulation signals TX and reference signals REFERENCE.

The frequency synthesizing device may be a direct digital synthesizer (DDS) circuit. Multiple sets of phase-locked loop (PLL) high-frequency oscillation signals are generated by the control of the processing device. In use, a set of PLL high-frequency oscillation signals is selected as the high-frequency modulation signals for output.

In an embodiment, please refer to FIG. 3, FIG. 3 illustrates a schematic diagram of a laser processing device provided in the embodiment of the disclosure. As shown in FIG. 3, the laser processing device may include an automatic laser power control circuit, which may include peripheral components such as a laser diode D3, a transistor Q2, and a comparator U18. Furthermore, the automatic laser power control circuit is simple, the automatic laser power control circuit may effectively control the automatic laser power and ensure that the laser emission power remains unchanged in an environment of -20 Celsius degrees (°C)~60°C, thereby ensuring stable ranging accuracy.

In an embodiment, the laser aiming device may be an existing laser-emitting device, the processing device controls the laser aiming device to turn on or turn off, thereby controlling whether to emit the visible light.

In an embodiment, the emitting optical system may be an existing emitting optical system, the emitting optical system is configured to ensure that a laser is collimated, focused, and projected onto the target, and the embodiments of the disclosure are not limited to this.

In an embodiment, the receiving optical system may be an existing receiving optical system, and the embodiments of the disclosure are not limited to this.

In an embodiment, the filtering device may be a wavelength filter.

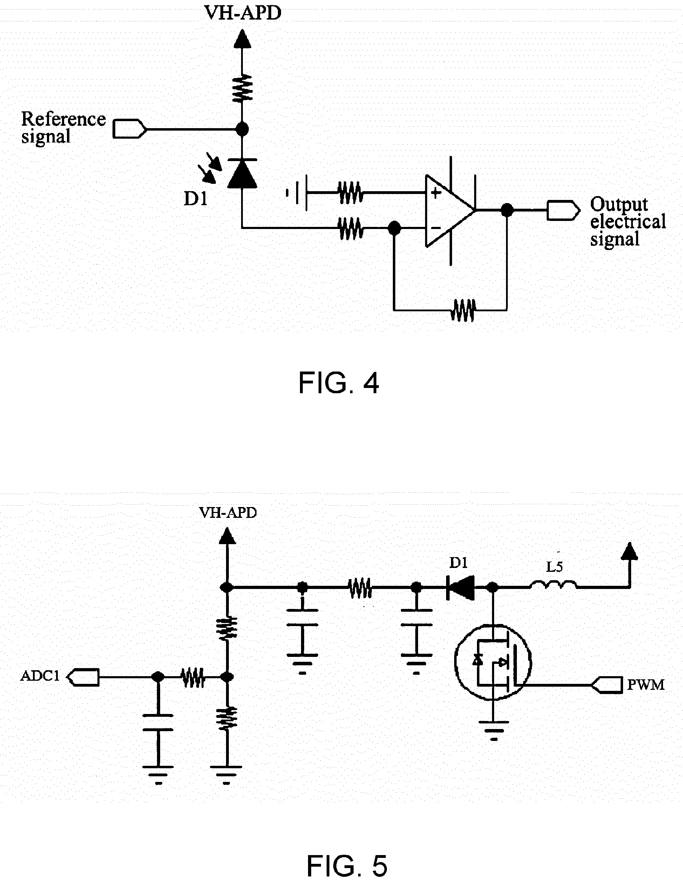

In an embodiment, please refer to FIG. 4, FIG. 4 illustrates a schematic diagram of a receiver and a transconductance amplification circuit provided in the embodiment of the disclosure. As shown in FIG. 4, the receiver is one of an avalanche photodiode (APD), and a photodiode.

Specifically, when the receiver is APD, the receiver is more sensitive to receive light signals, and the receiver has high gain and low noise, which ensures the ranging accuracy. The transconductance amplification circuit and APD form an optoelectronic frequency mixing circuit configured to demodulate out low-frequency signals.

In an embodiment, please refer to FIG. 5, FIG. 5 illustrates a schematic diagram of a bias circuit provided in the embodiment of the disclosure. As shown in FIG. 5, the bias circuit may include peripheral components such as an inductance L5 and a diode D1.

Moreover, the bias circuit changes the frequency control of pulse width modulation (PWM) and analog-to-digital conversion sampling of channel 1 of analog-to-digital converter (ADC1), which can achieve VH-APD voltage output accuracy of 0.1 volts (V). Traditional methods cannot achieve the voltage output accuracy of the disclosure. Furthermore, high-precision voltage is supplied to APD to improve the resolution of APD, thereby improving resultant ranging accuracy of the disclosure.

In an embodiment, the transconductance amplification circuit may be an existing transconductance amplification circuit, as long as the transconductance amplification circuit ensures that the signal of the outer optical path (i.e. the first low-frequency signal) and the signal of the inner optical path (i.e. the second low-frequency signal) undergo pre-amplification after demodulation of the receiver, the embodiments of the disclosure are not limited to this.

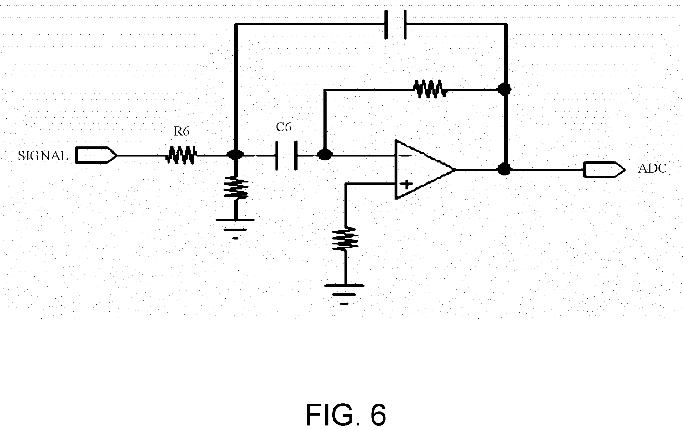

In an embodiment, please refer to FIG. 6, FIG. 6 illustrates a schematic diagram of a low-frequency bandpass amplification circuit provided in the embodiment of the disclosure. The low-frequency bandpass amplification circuit includes peripheral components such as a resistor R6 and a capacitor C6. The low-frequency bandpass amplification circuit is further configured to make the pre-amplified signals and reference signal be amplified within a preset frequency range, signals outside the frequency range are blocked, and useful signals are better amplified without distortion, which greatly improves measurement accuracy (also referred to as ranging accuracy) and stability.

In an embodiment, the display device may be a light emitting diode (LED) display screen.

In an embodiment, the processing device may be a chip or the like. Moreover, the processing device may achieve the phase discrimination of hardware, control various branches, and send the ranging data to the display device. Therefore, the range finder of the disclosure does not require an additional phase discrimination system needed in traditional ranging devices to complete ranging, which greatly reduces costs. The problems existing in production are correspondingly reduced, and the product appearance may be made small and compact.

Therefore, based on the above technical solutions, in the embodiments of the disclosure, the laser aiming device is added to the dual-wavelength phase range finder, and the laser aiming device may emit the visible light signal to the naked eye. Even in a strong light environment, the naked eye of the user can also accurately see whether the visible light is irradiated on the target, and thus the range finder can adapt to measurements in various environments. The dual-wavelength phase range finder also improves measurement range, measurement accuracy, and measurement speed, and the dual-wavelength phase range finder solves the problem of large measurement errors in various complex environments.

It should be understood that a specific structure of the frequency synthesizing device, a specific structure of the laser processing device, a specific structure of the laser aiming device, a specific structure of the emitting optical system, a specific structure of the receiving optical system, a specific structure of the filtering device, a specific structure of the receiver, a specific structure of the bias circuit, a specific structure of the transconductance amplification circuit, a specific structure of the low-frequency bandpass amplification circuit, a specific structure of the processing device, and a specific structure of the display device, a specific wavelength of the visible light signal, a specific wavelength of the first invisible light signal, and a specific wavelength of the second invisible light signal may be set according to actual needs. The embodiments of the disclosure are not limited to these.

In the description of the disclosure, it should be understood that the terms "first", "second", and the like are only used for a descriptive purpose and cannot be understood as indicating or implying relative importance or implying the number of indicated technical features. Therefore, features limited to "first", "second", and the like can explicitly or implicitly include one or more of these features. In the description of the disclosure, the meaning of "multiple" refers to two or more, unless otherwise specified.

In the disclosure, unless otherwise specified and defined, the terms such as "install", "connect", and "fix" should be interpreted in a broad sense. For example, the meanings of the terms can be a fixed connection, a detachable connection, an integration, a mechanical connection, or an electrical connection; the meanings of the terms can be a direct connection or indirect connection through an intermediate medium; and the meanings of the terms can be an internal connection of two elements or an interaction relationship between two elements. Those of ordinary skill in the art can understand the specific meanings of the above terms in the disclosure according to specific situations.

In the disclosure, unless otherwise specified and limited, the meaning of a first feature is "above" or "below" a second feature refers to the first and second features can be in direct contact, or the first and second features can be in indirect contact through an intermediate medium. In addition, the first feature is "on", "above", or "over" the second feature may mean that that first feature is directly above or obliquely above the second feature, or simply mean that the first feature is higher than the second feature. The first feature is "under" or "below" the second feature may mean that that first feature is directly below or obliquely below the second feature, or simply mean that the first feature is lower than the second feature.

### Reference number list

- TX: high-frequency modulation signals
- D1: diode
- D2: laser diode
- Q2: transistor
- U18: comparator
- L5: inductance
- R6: resistor
- C6: capacitor

## Claims

1. A phase range finder, comprising:
an emitting device, a receiving device, and a processing device;
wherein the emitting device comprises a frequency synthesizing device, a laser processing device, and a laser aiming device; and the laser processing device is connected between the frequency synthesizing device and the laser aiming device;
the processing device is configured to control the frequency synthesizing device to generate a high-frequency modulation signal and a reference signal; the high-frequency modulation signal passes through the laser processing device to define an outer optical path emitted to a target and define an inner optical path emitted to a filtering device of the receiving device, the outer optical path is configured to emit a first invisible light signal, and the inner optical path is configured to emit a second invisible light signal;
the receiving device comprises the filtering device, a receiver, and a signal-transmitting circuit;
the filtering device is configured to allow a first reflecting light signal and the second invisible light signal to pass through, and the first reflecting light signal is obtained by reflecting the first invisible light signal after the first invisible light signal is irradiated onto the target; the filtering device is further configured to block a second reflecting light signal;
the first invisible light signal and the reference signal undergo a photoelectric frequency mixing process at the receiver, thereby causing the processing device to obtain a first low-frequency signal; the second invisible light signal and the reference signal undergo the photoelectric frequency mixing process at the receiver, thereby causing the processing device to obtain a second low-frequency signal; and the first low-frequency signal and the second low-frequency signal pass through the signal-transmitting circuit to obtain an amplified first low-frequency signal and an amplified second low-frequency signal and then are transmitted to the processing device; and
the processing device is configured to determine a distance between the phase range finder and the target;
**characterized in that**
the processing device is configured to control the laser aiming device to emit a visible light signal for aiming at the target;
the second reflecting light signal is obtained by reflecting the visible light signal after the visible light signal is irradiated onto the target;
the processing device is specifically configured to control the laser aiming device to be turned on or turned off, to thereby control whether to emit the visible light signal for aiming at the target;
the receiver comprises a photodiode;
a wavelength of the first invisible light signal is equal to a wavelength of the second invisible light signal; and
the processing device is specifically configured to calculate a time difference of the amplified first low-frequency signal and the amplified second low-frequency signal, to thereby determine the distance between the phase range finder and the target.

2. The phase range finder as claimed in claim 1, wherein a wavelength of the visible light signal is smaller than the wavelength of the first invisible light signal.

3. The phase range finder as claimed in one of preceding claims, wherein the signal-transmitting circuit comprises a transconductance amplification circuit and a low-frequency bandpass amplification circuit; and
the transconductance amplification circuit is configured to respectively pre-amplify the first low-frequency signal and the second low-frequency signal to obtain a pre-amplified first low-frequency signal and a pre-amplified second low-frequency signal, and transmit the pre-amplified first low-frequency signal and the pre-amplified second low-frequency signal to the low-frequency bandpass amplification circuit; and the low-frequency bandpass amplification circuit is configured to respectively amplify the pre-amplified first low-frequency signal and the pre-amplified second low-frequency signal in a preset frequency range, thereby to obtain the amplified first low-frequency signal and the amplified second low-frequency signal, and transmit the amplified first low-frequency signal and the amplified second low-frequency signal to the processing device.

4. The phase range finder as claimed in in one of preceding claims, wherein the phase range finder further comprises a bias circuit configured to generate and supply a bias voltage to the receiver under control of the processing device, and a first end of the bias circuit is connected to the processing device and a second end of the bias circuit is connected to the receiver.

5. The phase range finder as claimed in one of preceding claims, wherein the phase range finder further comprises a display device configured to display the distance, and the display device is connected to the processing device.

6. The phase range finder as claimed in one of preceding claims, wherein the receiver comprises an avalanche photodiode, APD.

7. The phase range finder as claimed in claim 6, wherein the frequency synthesizing device comprises a direct digital synthesizer, DDS, circuit.

8. The phase range finder as claimed in claim 6 or 7, wherein the laser processing device comprises a laser driving circuit and laser diodes.

9. The phase range finder as claimed in one of preceding claims, wherein a color of the visible light signal is one of green, blue, and red.

10. The phase range finder as claimed in one of preceding claims, wherein a wavelength of the visible light signal is in a range of 440 nanometers, nm, to 580 nm, and the wavelength of the first invisible light signal and the wavelength of the second invisible light signal are both greater than 760 nm.

## Patentansprüche

1. Ein Phasen-Entfernungsmesser, umfassend:
eine Sendeeinrichtung, eine Empfangseinrichtung und eine Verarbeitungseinrichtung;
wobei die Sendeeinrichtung einen Frequenzsynthesizer, eine Laserverarbeitungseinrichtung und eine Laserzielvorrichtung umfasst; und die Laserverarbeitungseinrichtung zwischen dem Frequenzsynthesizer und der Laserzielvorrichtung verbunden ist;
die Verarbeitungseinrichtung ist konfiguriert, den Frequenzsynthesizer zu steuern, um ein Hochfrequenzmodulationssignal und ein Referenzsignal zu erzeugen; das Hochfrequenzmodulationssignal geht durch die Laserverarbeitungseinrichtung, um einen äußeren optischen Pfad zu definieren, der auf ein Ziel ausgestrahlt wird, und einen inneren optischen Pfad zu definieren, der auf eine Filtereinrichtung der Empfangseinrichtung ausgestrahlt wird, die Verarbeitungseinrichtung ist weiterhin konfiguriert, die Laserzielvorrichtung zu steuern, um ein sichtbares Lichtsignal zur Zielerfassung abzustrahlen, wobei der äußere optische Pfad so konfiguriert ist, dass ein erstes unsichtbares Lichtsignal ausgegeben wird, und der innere optische Pfad so konfiguriert ist, dass ein zweites unsichtbares Lichtsignal ausgegeben wird;
die Empfangseinrichtung umfasst die Filtereinrichtung, einen Empfänger und eine Signalschaltkreis;
die Filtereinrichtung ist konfiguriert, ein erstes reflektiertes Lichtsignal und das zweite unsichtbare Lichtsignal passieren zu lassen, und das erste reflektierte Lichtsignal wird durch Reflexion des ersten unsichtbaren Lichtsignals nach dessen Bestrahlung auf das Ziel erhalten; die Filtereinrichtung ist weiterhin konfiguriert, ein zweites reflektiertes Lichtsignal zu blocken, und das zweite reflektierte Lichtsignal wird durch Reflexion des sichtbaren Lichtsignals nach dessen Bestrahlung auf das Ziel erhalten; das erste unsichtbare Lichtsignal und das Referenzsignal unterliegen einem photoelektrischen Frequenzmischprozess am Empfänger, um ein erstes Niederfrequenzsignal zu erhalten; das zweite unsichtbare Lichtsignal und das Referenzsignal unterliegen dem photoelektrischen Frequenzmischprozess am Empfänger, um ein zweites Niederfrequenzsignal zu erhalten; und das erste Niederfrequenzsignal und das zweite Niederfrequenzsignal gehen durch den Signalschaltkreis, um ein verstärktes erstes Niederfrequenzsignal und ein verstärktes zweites Niederfrequenzsignal zu erhalten und dann an die Verarbeitungseinrichtung übertragen werden; und
die Verarbeitungseinrichtung ist konfiguriert, eine Entfernung zwischen dem Phasen-Entfernungsmesser und dem Ziel zu bestimmen;
**dadurch gekennzeichnet, dass**
die Verarbeitungseinrichtung speziell konfiguriert ist, die Laserzielvorrichtung einzuschalten oder auszuschalten, um damit zu steuern, ob das sichtbare Lichtsignal zur Zielerfassung ausgestrahlt wird;
der Empfänger einen Fotodiode umfasst;
eine Wellenlänge des ersten unsichtbaren Lichtsignals entspricht der Wellenlänge des zweiten unsichtbaren Lichtsignals; und
die Verarbeitungseinrichtung ist speziell konfiguriert, eine Zeitdifferenz des verstärkten ersten Niederfrequenzsignals und des verstärkten zweiten Niederfrequenzsignals zu berechnen, um dadurch die Entfernung zwischen dem Phasen-Entfernungsmesser und dem Ziel zu bestimmen.

2. Der Phasen-Entfernungsmesser gemäß Anspruch 1, wobei eine Wellenlänge des sichtbaren Lichtsignals kleiner als die Wellenlänge des ersten unsichtbaren Lichtsignals ist.

3. Der Phasen-Entfernungsmesser gemäß einem der vorhergehenden Ansprüche, wobei der Signalschaltkreis einen Transkonduktanzverstärzungsschaltkreis und einen Niederfrequenzbandpassverstärkungsschaltkreis umfasst; und
der Transkonduktanzverstärkungsschaltkreis ist konfiguriert, das erste Niederfrequenzsignal und das zweite Niederfrequenzsignal jeweils vorzuverstärken, um ein vorverstärktes erstes Niederfrequenzsignal und ein vorverstärktes zweites Niederfrequenzsignal zu erhalten und das vorverstärkte erste Niederfrequenzsignal und das vorverstärkte zweite Niederfrequenzsignal an den Niederfrequenzbandpassverstärkungsschaltkreis zu übertragen; und der Niederfrequenzbandpassverstärkungsschaltkreis ist konfiguriert, das vorverstärkte erste Niederfrequenzsignal und das vorverstärkte zweite Niederfrequenzsignal jeweils in einem vorgegebenen Frequenzbereich zu verstärken, um das verstärkte erste Niederfrequenzsignal und das verstärkte zweite Niederfrequenzsignal zu erhalten und diese an die Verarbeitungseinrichtung zu übertragen.

4. Der Phasen-Entfernungsmesser gemäß einem der vorhergehenden Ansprüche, wobei der Phasen-Entfernungsmesser ferner eine Bias-Schaltung umfasst, die konfiguriert ist, eine Betriebsspannung unter Steuerung der Verarbeitungseinrichtung zu erzeugen und zu liefern, und ein erstes Ende der Bias-Schaltung mit der Verarbeitungseinrichtung verbunden ist und ein zweites Ende der Bias-Schaltung mit dem Empfänger verbunden ist.

5. Der Phasen-Entfernungsmesser gemäß einem der vorhergehenden Ansprüche, wobei der Phasen-Entfernungsmesser ferner eine Anzeigevorrichtung umfasst, die konfiguriert ist, die Entfernung anzuzeigen, und die Anzeigevorrichtung mit der Verarbeitungseinrichtung verbunden ist.

6. Der Phasen-Entfernungsmesser gemäß einem der vorhergehenden Ansprüche, wobei der Empfänger eine Lawinenphotodiode (APD) umfasst.

7. Der Phasen-Entfernungsmesser gemäß Anspruch 6, wobei der Frequenzsynthesizer eine Direkt-Digital-Synthese-(DDS)-Schaltung umfasst.

8. Der Phasen-Entfernungsmesser gemäß Anspruch 6 oder 7, wobei die Laserverarbeitungseinrichtung eine Laserantriebsschaltung und Laserdioden umfasst.

9. Der Phasen-Entfernungsmesser gemäß einem der vorhergehenden Ansprüche, wobei eine Farbe des sichtbaren Lichtsignals eine von Grün, Blau und Rot ist.

10. Der Phasen-Entfernungsmesser gemäß einem der vorhergehenden Ansprüche, wobei eine Wellenlänge des sichtbaren Lichtsignals im Bereich von 440 Nanometern (nm) bis 580 nm liegt und die Wellenlänge des ersten unsichtbaren Lichtsignals und die Wellenlänge des zweiten unsichtbaren Lichtsignals beide größer als 760 nm sind.

## Revendications

1. Un télémètre à phase comprenant:
un dispositif d'émission, un dispositif de réception et un dispositif de traitement;
dans lequel le dispositif d'émission comprend un dispositif de synthèse de fréquence, un dispositif de traitement laser et un dispositif de visée laser; et le dispositif de traitement laser est connecté entre le dispositif de synthèse de fréquence et le dispositif de visée laser;
le dispositif de traitement est configuré pour contrôler le dispositif de synthèse de fréquence afin de générer un signal de modulation haute fréquence et un signal de référence; le signal de modulation haute fréquence passe à travers le dispositif de traitement laser pour définir un trajet optique externe émis vers une cible et un trajet optique interne émis vers un dispositif de filtrage du dispositif de réception, le dispositif de traitement est en outre configuré pour contrôler le dispositif de visée laser pour émettre un signal lumineux visible pour viser la cible, le trajet optique externe est configuré pour émettre un premier signal lumineux invisible, et le trajet optique interne est configuré pour émettre un second signal lumineux invisible;
le dispositif de réception comprend le dispositif de filtrage, un récepteur et un circuit de transmission de signal;
le dispositif de filtrage est configuré pour permettre le passage d'un premier signal lumineux réfléchi et du second signal lumineux invisible, et le premier signal lumineux réfléchi est obtenu par réflexion du premier signal lumineux invisible après que ce dernier a été irradié sur la cible; le dispositif de filtrage est en outre configuré pour bloquer un second signal lumineux réfléchi, et le second signal lumineux réfléchi est obtenu par réflexion du signal lumineux visible après que ce dernier a été irradié sur la cible; le premier signal lumineux invisible et le signal de référence subissent un processus de mélange photoélectrique à haute fréquence au récepteur, afin d'obtenir un premier signal basse fréquence; le second signal lumineux invisible et le signal de référence subissent le processus de mélange photoélectrique à haute fréquence au récepteur, afin d'obtenir un second signal basse fréquence; et les premiers et seconds signaux basse fréquence passent à travers le circuit de transmission de signal pour obtenir un premier signal basse fréquence amplifié et un second signal basse fréquence amplifié puis sont transmis au dispositif de traitement;
et le dispositif de traitement est configuré pour déterminer une distance entre le télémètre à phase et la cible;
**caractérisé en ce que**
le dispositif de traitement est spécifiquement configuré pour contrôler l'allumage ou l'extinction du dispositif de visée laser, pour ainsi contrôler si le signal lumineux visible pour viser la cible doit être émis ou non;
le récepteur comprend une photodiode;
une longueur d'onde du premier signal lumineux invisible est égale à la longueur d'onde du second signal lumineux invisible; et
le dispositif de traitement est spécifiquement configuré pour calculer une différence de temps entre le premier signal basse fréquence amplifié et le second signal basse fréquence amplifié, pour ainsi déterminer la distance entre le télémètre à phase et la cible.

2. Le télémètre à phase selon la revendication 1, dans lequel une longueur d'onde du signal lumineux visible est inférieure à la longueur d'onde du premier signal lumineux invisible.

3. Le télémètre à phase selon l'une des revendications précédentes, dans lequel le circuit de transmission de signal comprend un circuit d'amplification transconductance et un circuit d'amplification passe-bande basse fréquence; et
le circuit d'amplification transconductance est configuré pour pré-amplifier respectivement le premier signal basse fréquence et le second signal basse fréquence pour obtenir un premier signal basse fréquence pré-amplifié et un second signal basse fréquence pré-amplifié, et transmettre le premier signal basse fréquence pré-amplifié et le second signal basse fréquence pré-amplifié au circuit d'amplification passe-bande basse fréquence; et le circuit d'amplification passe-bande basse fréquence est configuré pour amplifier respectivement le premier signal basse fréquence pré-amplifié et le second signal basse fréquence pré-amplifié dans une plage de fréquences prédéfinie, afin d'obtenir le premier signal basse fréquence amplifié et le second signal basse fréquence amplifié, et transmettre le premier signal basse fréquence amplifié et le second signal basse fréquence amplifié au dispositif de traitement.

4. Le télémètre à phase selon l'une des revendications précédentes, dans lequel le télémètre à phase comprend en outre un circuit de polarisation configuré pour générer et fournir une tension de polarisation au récepteur sous le contrôle du dispositif de traitement, et une première extrémité du circuit de polarisation est connectée au dispositif de traitement et une seconde extrémité du circuit de polarisation est connectée au récepteur.

5. Le télémètre à phase selon l'une des revendications précédentes, dans lequel le télémètre à phase comprend en outre un dispositif d'affichage configuré pour afficher la distance, et le dispositif d'affichage est connecté au dispositif de traitement.

6. Le télémètre à phase selon l'une des revendications précédentes, dans lequel le récepteur comprend une photodiode à avalanche (APD).

7. Le télémètre à phase selon la revendication 6, dans lequel le dispositif de synthèse de fréquence comprend un circuit de synthèse numérique directe (DDS).

8. Le télémètre à phase selon la revendication 6 ou 7, dans lequel le dispositif de traitement laser comprend un circuit de commande de laser et des diodes laser.

9. Le télémètre à phase selon l'une des revendications précédentes, dans lequel la couleur du signal lumineux visible est l'une de vert, bleu et rouge.

10. Le télémètre à phase selon l'une des revendications précédentes, dans lequel une longueur d'onde du signal lumineux visible est comprise entre 440 nanomètres (nm) et 580 nm, et la longueur d'onde du premier signal lumineux invisible et la longueur d'onde du second signal lumineux invisible sont toutes deux supérieures à 760 nm.
